# EUROPEAN PATENT SPECIFICATION

(11) **EP 3 371 488 B1**
(45) Date of publication and mention of the grant of the patent: **18.03.2020**
(21) Application number: 15790520.9
(22) Date of filing: 02.11.2015
(51) Int. Cl.: F16H 61/24, F16H 59/08

(54) **A SHIFT ACTUATOR ASSEMBLY FOR A VEHICLE TRANSMISSION**
GANGSCHALTUNGSANORDNUNG FÜR EIN FAHRZEUGGETRIEBE
ENSEMBLE ACTIONNEUR DE CHANGEMENT DE VITESSES POUR UNE TRANSMISSION DE VÉHICULE

(43) Date of publication of application: 12.09.2018
(73) Proprietor: INVENTUS Engineering GmbH, 6771 St. Anton i.M. (AT)
(72) Inventor: NILSSON, Henrik, 565 33 Mullsjö (SE); PREISIG, Nicolas, 951 44 Výcapy-Opatovce (SK)
(74) Representative: Ofner, Clemens
(86) International application number: PCT/EP2015/075461
(87) International publication number: WO 2017/076422

(56) References cited:
- DE-A1-102007 011 901
- DE-A1-102012 203 095
- DE-A1-102012 219 803
- US-B2- 8 174 512

## Description

The present invention is directed to a shift actuator assembly for a vehicle transmission including an actuator moveable between a number of predetermined shift positions, a sensor for sensing the shift lever position, a mechanical detent mechanism such that at the predetermined shift positions a detent engagement feeling is generated, an adaptive braking mechanism acting on the actuator to selectively increase the resistance against actuator movements, and a controller receiving the input from the position sensor, wherein the controller is arranged to control the adaptive brake mechanism.

Such shift actuator assemblies may for example comprise a rotary knob which is used to shift between shift positions P, R, N, D of an automatic mode of a vehicle transmission. Another example for a shift actuator is a shift lever that may be pivoted between predetermined shift positions.

Since a long time it is common to use a detent mechanism in connection with such shift actuators which create a detent engagement feeling when the shift actuator reaches one of the predetermined shift positions. Typically, such detent mechanisms include a displaceable detent plunger which is spring biased to a detent track which includes a number of valleys, each valley corresponding to one of the predetermined shift positions. The shapes of the valley are typically arranged such that the detent plunger snaps into the valley when the predetermined shift position is reached which on the one hand brings the shift actuator to a well defined position and which on the other hand provides a haptic perception serving as a feedback to the operator that the shift operation has been completed.

Recently it has been suggested to utilize adaptive braking mechanisms to simulate haptic effects similar to mechanical detents. For example in US 2010/0051374 A1 a vehicle operator input device is disclosed which has no mechanical detent mechanism but is provided with an adaptive braking mechanism. The adaptive braking mechanism is based on a magneto-rheological fluid coupling between a moveable part connected to the shift actuator and a stationary part. A position sensor is provided to sense the position of the shift actuator. A controller is programmed to activate the magneto-rheological braking mechanism at predetermined shift positions to brake the shift actuator. In fact the magneto-rheological braking mechanism is activated by the controller a short time before the predetermined shift position is reached to take into account the known short delay time (response time) of the magneto-rheological brake. More precisely the the controller is arranged to activate the magneto-rheological brake when the shift actuator is a short distance ahead of the predetermined shift position so that the short distance divided by an average velocity of the shift actuator corresponds to the response time. To simulate a mechanical detent the controller controls the braking force at the predetermined shift positions in such a manner that there is first a force peak, whereafter the braking force is dropping to a very low level, followed by further force peak. The low level braking force valley between the two peaks at the predetermined shift position is intended to create a similar effective feeling as the engagement of a mechanical detent in a valley of a detent track.

However, adaptive braking mechanisms are not capable of generating all effects of a mechanical detent mechanism. For example, an adaptive braking mechanism can only create a resistance force or braking force slowing down or stopping movement of the shift actuator but cannot add force to the shift actuator. The mechanical detent mechanism indeed adds force to the shift actuator when the spring biased detent plunger snaps into the valley which creates a force on the shift actuator. Therefore, it has been considered to combine a mechanical detent mechanism with a programmable adaptive braking mechanism in order to be able to modify the haptic perceptions provided by the mechanical detent by adding adaptive braking effects which are superimposed on the mechanical detent effects. Such a combined adaptive braking mechanism and mechanical detent mechanism acting on an input actuator is described in US 8,174,512 B2. In particular a rotary knob is disclosed that may be utilized to control various functions in a motor vehicle, such as radio, air condition etc. US 8,174,512 B2 does not mention an input actuator assembly for a vehicle transmission in particular but otherwise discloses the features of the preamble of claim 1. The input actuator assembly has a mechanical detent track with a plurality of detent valleys and a spring biased detent plunger which is moved along the detent track when the rotary knob is rotated. A controller communicating with a position sensor is programmable to control an adaptive braking mechanism to add the desired resistance force profiles to modify or enhance the mechanical detent effects.

The present invention is in particular concerned with shift-by-wire gearshift assemblies. In a poly-stable shifter or a mono-stable shifter with multiple non-stable positions a mechanical detent track and a detent plunger which is spring biased can provide the desired tactile or haptic feedback to the operator that a new shift position has been reached. However, in resent SBW gearshift assemblies which utilize more and more compact input actuators the driver has to be well accustomed to the shift actuator since due to the compact design the movement distances between shift positions are very small. In situations where the driver is not accustomed to the gearshift assembly (for example when entering a rental car for the first time) there is a risk that driver moves the shift actuator too far and misses the desired shift position ("over-stepping"), i.e. the shift actuator has inadvertently been moved and passed the shift position already that was actually desired to be reached. In such situations there is a risk that the shift actuator is not brought to the desired shift position but to the next adjacent shift position in a shifting gate which may also create safety risks.

It is an object of the present invention to provide a shift actuator assembly that may be operated by a driver in a safe and reliable manner even if the driver is not well accustomed to the particular gearshift input actuator assembly.

This object is achieved by a shift actuator assembly comprising the features of claim 1 or claim 2. Preferred embodiments of the invention are set out in the dependent claims.

According to the present invention the controller is arranged to control, in response to the position sensor signals, the adaptive brake mechanism so that, if the actuator reaches any of the predetermined shift positions, the braking force of the adaptive braking mechanism is increased to an extent such that the actuator movement is completely stopped for a predetermined period of time, whereafter the adaptive braking mechanism is released. This means that there is an arrestment of movement of the shift actuator for a predetermined time interval so that the driver will feel a stop of movement or standstill after having reached the next of the predetermined shift positions. If it is the intention of the driver to reach this next of the predetermined shift position he or she will feel a comfortable stop and is assured that the next position has been reached. If the driver intended to move the shift actuator further to another of the predetermined shift positions he or she will continue to operate the shift actuator after the predetermined period of time expired and the adaptive braking mechanism has been deactivated again.

The above-mentioned problem is also achieved by arranging a shift actuator assembly such that the controller is arranged to analyze a velocity signal representative for the velocity of the shift actuator movement. In this case the controller is arranged to control the adaptive brake mechanism so that, if the actuator reaches of the predetermined shift positions and the velocity of the actuator is below a threshold velocity, the braking force of the adaptive braking mechanism is increased such that the actuator movement is completely stopped for a predetermined period of time, whereafter the adaptive braking mechanism is released. On the other hand the controller is arranged to omit activation of the adaptive braking mechanism and to omit arrestment of movement of the actuator upon passing one of the predetermined shift positions if the velocity of the shift actuator movement is above the threshold velocity. This arrangement also provides for a shift actuator assembly that may be operated in a safe and reliable manner. If the driver is familiar with the shift actuator assembly he or she may wish to move the shift actuator to a new shift position without stop of the shift actuator at an intermediate one of the predetermined shift positions by moving the shift actuator in a fast manner. In this manner the driver can override the normally automatically effected stop or movement arrest for the predetermined period of time. However, this does not affect the safe and reliable operation for a unaccustomed driver because such driver is not familiar with the details of the shift actuator assembly will not know that compulsory or mandatory arrestment of movement can be overridden or skipped by moving the shift actuator with a velocity above the threshold velocity.

In a preferred embodiment the adaptive brake mechanism utilizes a magneto-rheological fluid acting between a component moving with the shift actuator and a stationary component. The controller is arranged to control a magnetic field generator to generate a magnetic field in the area of the magneto-rheological fluid upon activation which increases the coupling between the components to effect a braking resistance against actuator movement.

In order to ensure that the shift actuator movement is completely stopped at a predetermined shift position the controller may be arranged to determine a velocity of the shift actuator, which may be accomplished by having a velocity sensor or by arranging the controller to analyze the position sensor signals to derive a velocity signal therefrom. In this case the brake force of the adaptive brake mechanism can be increased to a level at which a velocity of zero is confirmed for the shift actuator. Alternatively, the controller can be arranged to operate the adaptive brake mechanism to generate a brake force which is sufficiently high so that no driver would be able to overcome the arrest of the shift actuator under normal circumstances.

Suitable magneto-rheological devices which may be implemented to be used as an adaptive brake mechanism for the present invention are described for example in US 2013/0175132 A1.

In a preferred embodiment the controller is arranged to control the adaptive brake mechanism such that the predetermined period of time of arrestment of movement of the actuator is within the range 0.05 to 0.9 seconds.

The shift actuator can for example be a shift lever or a rotary knob.

The invention will in the following be described in connection with an exemplary embodiment and by illustrating the performance of such shift actuator assembly according to the present invention, wherein in the drawings:
Fig. 1 shows a schematical cross-sectional view of a shift actuator according to the invention which is includes a rotary knob,
Fig. 2 shows a graph of the angular velocity of the rotary knob of Fig. 1 as a function of time when the rotary knob is rotated through several subsequent predetermined shift positions; and
Fig. 3 shows a graph of the torque needed to rotate the rotary knob as a function of time when the rotary knob is rotated through several subsequent predetermined shift positions.

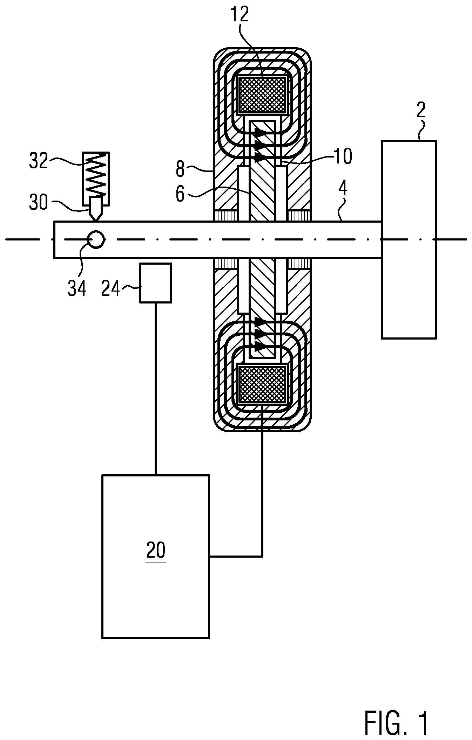

Fig. 1 shows a schematical cross-section of a shift actuator which includes a rotary knob 2. The rotary knob 2 is fixed to a shaft 4 which is mounted in a housing (not shown) so as to be rotatable around its longitudinal axis. A rotor 6 is fixed to the shaft 4. The rotor 6 is disposed within a housing 8 and is freely rotatable therein. At its outer periphery the rotor 6 projects into an annular chamber 10 within the housing, which chamber is filled with a magneto-rheological fluid. Disposed adjacent to the chamber 10 filled with magneto-rheological fluid a coil 12 is provided in the housing 8. If electricity is supplied to the coil 12 a magnet field is generated which also penetrates the chamber 10 and the magneto-rheological fluid. In response to a magnet field the viscosity of the fluid abruptly rises, and consequently the shear forces of the magneto-rheological fluid in the chamber 10 drastically increase so that a high braking force is exerted on the rotor 6 and thus on the rotary knob 2 which brings the rotary knob to a stop. For further details regarding design and operation of magneto-rheological brake mechanisms reference is made to US 2013/0175132 A1.

Supply of electricity to the coil 12 is controlled by a controller 20. The controller 20 is further connected to an angular position sensor 24 which senses a signal representative for the angular position of the shaft 4.

There is furthermore a mechanical detent mechanism, namely a detent plunger 30 which is urged by a spring 32 onto the surface of the shaft 4. In this region the surface of the shaft 4 is provided with a detent track. The detent track comprises a number of recesses which are circumferentially distributed around the circumference of the shaft 4. For each of the predetermined positions of the rotary knob 2 there is a corresponding recess which comes into engagement with the detent plunger 30 at the particular predetermined position of the rotary knob 2. One of these detent recesses is indicated in Fig. 1 by a dot 34 in the middle of the shaft 4.

The controller 20 is arranged to supply electricity to the coil 12 to generate a magnetic field such that the magneto-rheological brake is active when the rotary knob 2 reaches one of its predetermined angular positions and the mechanical detent mechanism also became engaged. In fact, the controller 20 has to supply electricity to the coil 12 a short time in advance, before the rotary knob 2 reaches a particular of the predetermined positions in order to take into account the response time of the magneto-rheological fluid. This can be achieved by starting supply of electricity to the coil already at a small angular distance before the predetermined angular position, which small angular distance is chosen such that this small angular distance is equal to the response time times an estimated average angular velocity of the rotary knob 2.

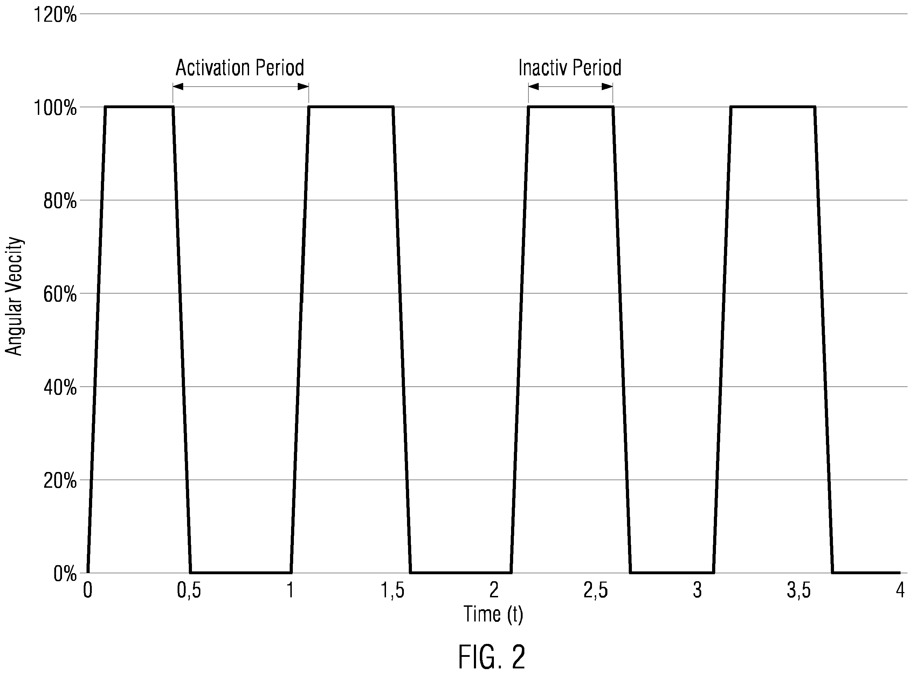

Fig. 2 shows a graph of the angular velocity as a function of time when the rotary knob 2 is rotated by applying a given constant torque to rotate the rotary knob to pass several subsequent predetermined shift positions, for example P, R, N, D. Between subsequent predetermined shift positions the constant torque applied results in a constant angular velocity (a relative angular velocity of 100% is shown). After about 0.5 s the rotary knob approaches the next predetermined shift position. The controller receives information from the angular position sensor 24 and activates the adaptive brake mechanism to apply a predetermined maximal brake force. This brake or resistance force is chosen such that it is not possible to rotate the knob further by manual force so that the rotary knob stops, i.e. the angular velocity drops to zero. The rotary knob is arrested at the shift position for a predetermined period of time, in Fig. 2 for about 0.5 s. This sequence is repeated while the rotary knob is rotated along the sequence of predetermined shift positions over the time interval shown in Fig. 2.

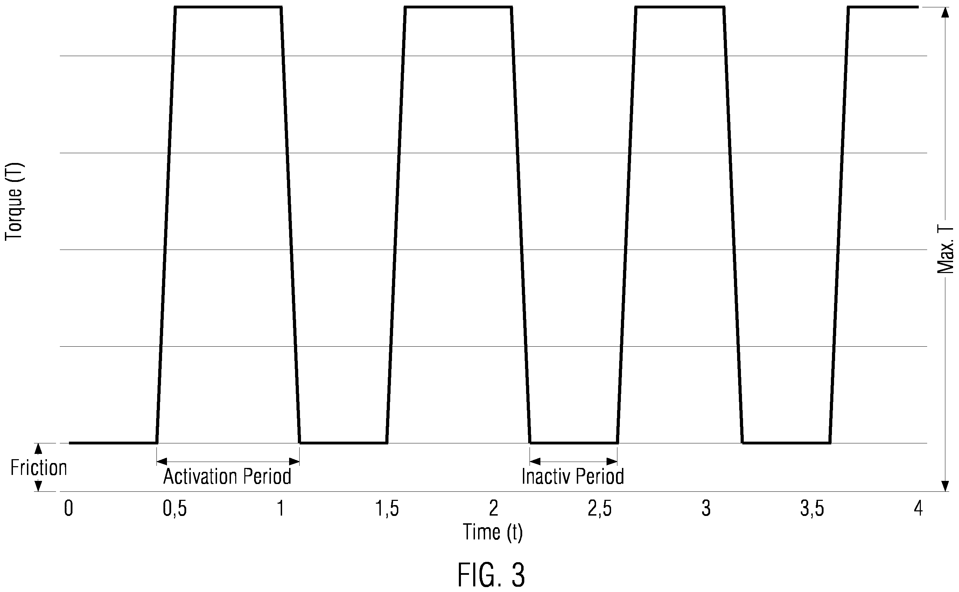

Fig. 3 shows, for same rotary movement of the rotary knob along the sequence of predetermined shift positions as in Fig. 2, the torque needed to rotate the rotary knob. The torque is indicated in arbitrary units. Between predetermined shift positions a small torque is needed to overcome friction to rotate the rotary knob. When the rotary knob is approaching one of the predetermined shift positions after about 0.5 s the controller activates the adaptive brake mechanism to apply a maximal braking or resistance force. This maximal resistance force is chosen such that the torque (Max. T) that would be needed to overcome the resistance to rotate the rotary knob is so high that is exceeds any manual force a human driver could normally apply. Therefore, the rotary knob is stopped for the predetermined period of time, i.e. the angular velocity is zero as shown in Fig. 2 when the adaptive brake mechanism is activated. After the predetermined period of time of activation of the adaptive brake mechanism the controller deactivates adaptive brake mechanism so that the rotary knob can be rotated further by applying a small torque as shown in Fig. 3 until the rotary knob approaches the next of the predetermined shift positions.

Figs. 2 and 3 show an embodiment of the invention in which the shift actuator is forced to stop at each of the predetermined shift positions unconditionally. As mentioned above, there is an alternative concept that the forced stop at a predetermined shift position is skipped in case the shift actuator has a velocity above a threshold velocity when reaching this predetermined shift position. The latter embodiment is not shown in the drawings.

An adaptive brake mechanism utilizing the effect of a magneto-rheological fluid has a quick response time. However, there is a brief, known delay time between activation and full effect of the brake mechanism. The controller is adapted to take into account this delay time by activating the adaptive brake mechanism already in advance at a position of the shift actuator at a short distance away from the predetermined shift position. This distance is chosen such that at a typical movement velocity of the shift actuator the known response time of the adaptive brake mechanism is over when the shift actuator reaches the predetermined shift position.

## Claims

1. A shift actuator assembly for a vehicle transmission including a shift actuator (2) moveable between a number of predetermined shift positions, a sensor (24) for sensing the shift actuator position, a mechanical detent mechanism (30, 32, 34) such that at the predetermined shift positions a detent engagement feeling is generated, an adaptive braking mechanism (10, 12) acting on the actuator (2) to selectively increase the resistance against shift actuator movements, and a controller (20) receiving input from the position sensor (24), wherein the controller (20) is arranged to control the adaptive brake mechanism (10, 12), **characterized in that** the controller is arranged to control the adaptive brake mechanism so that, if the shift actuator (2) reaches any of the predetermined shift positions, the braking force of the adaptive braking mechanism is increased such that the actuator movement is completely stopped for a predetermined period of time, whereafter the adaptive braking mechanism is released.

2. A shift actuator assembly for a vehicle transmission including a shift actuator (2) moveable between a number of predetermined shift positions, a sensor (24) for sensing the shift actuator position, a mechanical detent mechanism (30, 32, 34) such that at the predetermined shift positions a detent engagement feeling is generated, an adaptive braking mechanism (10, 12) acting on the shift actuator to selectively increase the resistance against shift actuator movements, and a controller (20) receiving input from the position sensor (24), wherein the controller (20) is arranged to control the adaptive brake mechanism (10, 12), **characterized in that in that** the controller (20) is arranged to receive a velocity signal representative for the velocity of the shift actuator movement, to control the adaptive brake mechanism (10, 12) so that, if the actuator (2) reaches any of the predetermined shift positions and the velocity of the shift actuator is below a threshold velocity, the braking force of the adaptive braking mechanism (10, 12) is increased such that the actuator movement is completely stopped for a predetermined period of time, whereafter the adaptive braking mechanism is released, whereas the controller (20) is arranged to omit activation of the adaptive braking mechanism and arrestment of movement of the shift actuator upon passing one of the predetermined shift positions when the velocity determined is above the threshold velocity.

3. The shift actuator assembly according to claim 1 or 2, **characterized in that** the adaptive brake mechanism (10, 12) utilizes a magneto-rheological fluid acting between a component (6) moving with the shift actuator (2) and a stationary component (8), wherein the controller (20) is arranged to control a magnetic field generator (12) to generate a magnetic field in the area of the magneto-rheological fluid upon activation.

4. The shift actuator assembly according to any of the claims 1 to 3, **characterized in that** the controller (20) is arranged to control the adaptive brake mechanism such that the predetermined period of time of arrestment of movement of the actuator is within the range 0.05 to 0.9 seconds.

5. The shift actuator assembly according to any of the claims 1 to 4, **characterized in that** the shift actuator is a shift lever.

6. The shift actuator assembly according to any of the claims 1 to 4, **characterized in that** the shift actuator (2) is a rotary knob.

## Patentansprüche

1. Gangschaltungsanordnung für ein Fahrzeuggetriebe umfassend eine Gangschaltung (2), die zwischen einer Reihe vorbestimmter Schaltpositionen bewegbar ist, einen Sensor (24) zum Detektieren der Gangschaltungsposition, einen mechanischen Arretiermechanismus (30, 32, 34) durch den an den vorbestimmten Schaltpositionen ein Arretierungseingriffsgefühl erzeugt wird, einen adaptiven Bremsmechanismus (10, 12) der auf die Schaltung (2) einwirkt um den Widerstand gegen Bewegungen der Gangschaltung selektiv zu erhöhen, und eine Steuerung (20), die Eingaben vom Positionssensor (24) empfängt, wobei die Steuerung (20) dazu eingerichtet ist den adaptiven Bremsmechanismus (10, 12) zu steuern, **dadurch gekennzeichnet, dass** die Steuerung dazu eingerichtet ist, den adaptiven Bremsmechanismus derart zu steuern, dass wenn die Gangschaltung (2) eine der vorbestimmten Schaltpositionen erreicht, die Bremskraft des adaptiven Bremsmechanismus so erhöht wird, dass die Schaltungsbewegung für einen vorbestimmten Zeitabschnitt vollständig gestoppt wird, wonach der adaptive Bremsmechanismus freigegeben wird.

2. Gangschaltungsanordnung für ein Fahrzeuggetriebe umfassend eine Gangschaltung (2), die zwischen einer Reihe vorbestimmter Schaltpositionen bewegbar ist, einen Sensor (24) zum Detektieren der Gangschaltungsposition, einen mechanischen Arretiermechanismus (30, 32, 34) durch den an den vorbestimmten Schaltpositionen ein Arretierungseingriffsgefühl erzeugt wird, einen adaptiven Bremsmechanismus (10, 12) der auf die Gangschaltung einwirkt um den Widerstand gegen Bewegungen der Gangschaltung selektiv zu erhöhen, und eine Steuerung (20), die Eingaben vom Positionssensor (24) empfängt, wobei die Steuerung (20) dazu eingerichtet ist den adaptiven Bremsmechanismus (10, 12) zu steuern, **dadurch gekennzeichnet, dass** die Steuerung (20) dazu eingerichtet ist, ein Geschwindigkeitssignal zu empfangen, das die Geschwindigkeit der Gangschaltungsbewegung wiedergibt, um den adaptiven Bremsmechanismus (10, 12) derart zu steuern, dass wenn die Schaltung (2) eine der vorbestimmten Schaltpositionen erreicht und die Geschwindigkeit der Gangschaltung unterhalb eines Geschwindigkeitsgrenzwerts liegt, die Bremskraft des adaptiven Bremsmechanismus (10, 12) so erhöht wird, dass die Schaltungsbewegung für einen vorbestimmten Zeitabschnitt vollständig gestoppt wird, wonach der adaptive Bremsmechanismus freigegeben wird, während die Steuerung (20) dazu eingerichtet ist, die Aktivierung des adaptiven Bremsmechanismus und die Bewegungsarretierung der Gangschaltung beim Überschreiten einer der vorbestimmten Schaltpositionen zu unterlassen, wenn die ermittelte Geschwindigkeit über dem Geschwindigkeitsgrenzwert liegt.

3. Gangschaltungsanordnung nach Anspruch 1 oder 2, **dadurch gekennzeichnet, dass** der adaptive Bremsmechanismus (10, 12) eine magnetorheologische Flüssigkeit verwendet, die zwischen einer sich mit der Gangschaltung (2) bewegenden Komponente (6) und einer stationären Komponente (8) wirkt, wobei die Steuerung (20) dazu eingerichtet ist, einen Magnetfeldgenerator (12) zu steuern, um bei Aktivierung ein Magnetfeld im Bereich der magnetorheologischen Flüssigkeit zu erzeugen.

4. Gangschaltungsanordnung nach einem der Ansprüche 1 bis 3, **dadurch gekennzeichnet, dass** die Steuerung (20) dazu eingerichtet ist, den adaptiven Bremsmechanismus so zu steuern, dass der vorgegebene Zeitabschnitt der Bewegungsarretierung der Schaltung im Bereich von 0,05 bis 0,9 Sekunden liegt.

5. Gangschaltungsanordnung nach einem der Ansprüche 1 bis 4, **dadurch gekennzeichnet, dass** die Gangschaltung ein Schalthebel ist.

6. Gangschaltungsanordnung nach einem der Ansprüche 1 bis 4, **dadurch gekennzeichnet, dass** die Gangschaltung (2) ein Drehknopf ist.

## Revendications

1. Ensemble actionneur de changement de vitesse pour une transmission de véhicule comprenant un actionneur de changement de vitesse (2) mobile entre un certain nombre de positions de changement de vitesse prédéterminées, un capteur (24) pour détecter la position d'actionneur de changement de vitesse, un mécanisme de détente mécanique (30, 32, 34) de telle sorte que dans les positions de changement de vitesse prédéterminées, une sensation de mise en prise de détente est générée, un mécanisme de freinage adaptatif (10, 12) agissant sur l'actionneur (2) pour augmenter de manière sélective la résistance à l'encontre de mouvements d'actionneur de changement de vitesse, et un dispositif de commande (20) recevant une entrée à partir du capteur de position (24), dans lequel le dispositif de commande (20) est agencé pour commander le mécanisme de freinage adaptatif (10, 12), **caractérisé en ce que** le dispositif de commande est agencé pour commander le mécanisme de freinage adaptatif de telle sorte que si l'actionneur de changement de vitesse (2) atteint l'une quelconque des positions de changement de vitesse prédéterminées, la force de freinage du mécanisme de freinage adaptatif est augmentée de telle sorte que le mouvement d'actionneur est complètement arrêté pendant une période de temps prédéterminée, après quoi le mécanisme de freinage adaptatif est libéré.

2. Ensemble actionneur de changement de vitesse pour une transmission de véhicule comprenant un actionneur de changement de vitesse (2) mobile entre un certain nombre de positions de changement de vitesse prédéterminées, un capteur (24) pour détecter la position d'actionneur de changement de vitesse, un mécanisme de détente mécanique (30, 32, 34) de telle sorte que dans les positions de changement de vitesse prédéterminées, une sensation de mise en prise de détente soit générée, un mécanisme de freinage adaptatif (10, 12) agissant sur l'actionneur de changement de vitesse pour augmenter sélectivement la résistance à l'encontre de mouvements d'actionneur de changement de vitesse, et un dispositif de commande (20) recevant une entrée à partir du capteur de position (24), dans lequel le dispositif de commande (20) est agencé pour commander le mécanisme de freinage adaptatif (10, 12), **caractérisé en ce que** le dispositif de commande (20) est agencé pour recevoir un signal de vitesse représentatif de la vitesse du mouvement d'actionneur de changement de vitesse, pour commander le mécanisme de freinage adaptatif (10, 12) de telle sorte que si l'actionneur (2) atteint l'une quelconque des positions de changement de vitesse prédéterminées et la vitesse de l'actionneur de changement de vitesse est inférieure à une vitesse de seuil, la force de freinage du mécanisme de freinage adaptatif (10, 12) est augmentée de telle sorte que le mouvement d'actionneur est complètement arrêté pendant une période de temps prédéterminée, après quoi le mécanisme de freinage adaptatif est relâché, tandis que le dispositif de commande (20) est agencé pour omettre une activation du mécanisme de freinage adaptatif et un arrêt de mouvement de l'actionneur de changement de vitesse lors du passage d'une des positions de changement de vitesse prédéterminées lorsque la vitesse déterminée est supérieure à la vitesse de seuil.

3. Ensemble actionneur de changement de vitesse selon la revendication 1 ou 2, **caractérisé en ce que** le mécanisme de freinage adaptatif (10, 12) utilise un fluide magnétorhéologique agissant entre un composant (6) se déplaçant avec l'actionneur de changement de vitesse (2) et un composant stationnaire (8), dans lequel le dispositif de commande (20) est agencé pour commander un générateur de champ magnétique (12) pour générer un champ magnétique dans la zone du fluide magnétorhéologique lors d'une activation.

4. Ensemble actionneur de changement de vitesse selon l'une quelconque des revendications 1 à 3, **caractérisé en ce que** le dispositif de commande (20) est agencé pour commander le mécanisme de freinage adaptatif de telle sorte que la période de temps prédéterminée d'arrêt de mouvement de l'actionneur soit dans la plage de 0,05 à 0,9 seconde.

5. Ensemble actionneur de changement de vitesse selon l'une quelconque des revendications 1 à 4, **caractérisé en ce que** l'actionneur de changement de vitesse est un levier de changement de vitesse.

6. Ensemble actionneur de changement de vitesse selon l'une quelconque des revendications 1 à 4, **caractérisé en ce que** l'actionneur de changement de vitesse (2) est un bouton rotatif.
